# EUROPEAN PATENT APPLICATION

(11) **EP 2 709 240 A2**
(43) Date of publication of application: **19.03.2014**
(21) Application number: 13183596.9
(22) Date of filing: 09.09.2013
(51) Int. Cl.: H02K 1/27, H02K 5/10

(54) **Motor**

(30) Priority: 12.09.2012 KR 20120101259
(71) Applicant: Samsung Electronics Co., Ltd, Gyeonggi-do 443-742 (KR)
(72) Inventor: Lee, Sung Gu, Gyeonggi-do (KR); In, Byung Ryel, Gyeonggi-do (KR); Bang, Myung Bae, Gyeonggi-do (KR); Yoon, Keun Young, Gyeonggi-do (KR)
(74) Representative: Walaski, Jan Filip

(57) **Abstract**

A motor having a structure that enhances durability of the motor. The motor includes a stator and a rotor rotatably disposed at an inside outside of the stator. The rotor includes a plurality of rotor cores radially disposed and a plurality of magnets respectively disposed between rotor cores. The area of a lateral surface of each of the magnets adjoining a lateral surface of a corresponding one of the rotor cores is greater than the area of an imaginary plane connecting one end of an upper end portion of each of the magnets to one end of a lower end portion of each of the magnets.

## Description

The present invention relates to a motor.

A motor, which produces rotating power from electric energy, is provided with a stator and a rotor. The rotor is configured to electromagnetically interact with the stator, and is rotated by force acting between a magnetic field and current flowing through a coil.

Permanent magnet motors using a permanent magnet to generate a magnetic field are classified into a surface mounted permanent magnet motor, an interior type permanent magnet motor and a spoke type permanent magnet motor.

The spoke type permanent magnet motor has a structure producing high concentration of magnetic flux and thus may generate high torque and high output power while having a relatively small size for the same output. Accordingly, the spoke type permanent magnet motor is usable as a drive motor for a washing machine, an electric vehicle and a small generator which require high torque and high output power.

The rotor of a spoke type permanent magnet motor generally includes permanent magnets radially disposed about a rotating shaft and rotor cores respectively disposed between the permanent magnets. However, the permanent magnets may be separated from the rotor cores by centrifugal force when the rotor rotates at high speed.

Therefore, it is an aspect of the present disclosure to provide a motor having an improved structure that may provide the motor with enhanced durability.

It is another aspect of the present disclosure to provide a motor having an improved structure that may enhance motor performance.

Additional aspects of the disclosure will be set forth in part in the description which follows and, in part, will be apparent from the description, or may be learned by practice of the disclosure.

In accordance with one aspect of the present disclosure, a motor includes a stator and a rotor rotatably disposed at an inside or outside of the stator, wherein the rotor includes a plurality of rotor cores radially disposed, and a plurality of magnets respectively disposed between the rotor cores, wherein an area of a lateral surface of each of the magnets adjoining a lateral surface of a corresponding one of the rotor cores is greater than an area of an imaginary plane connecting one end of an upper end portion of each of the magnets to one end of a lower end portion of each of the magnets.

The lateral surface of each of the magnets may include at least one first bent portion formed to be bent in a circumferential direction of the rotor.

The lateral surface of each of the magnets may include at least one second bent portion connected with the first bent portion and formed to be bent in a direction different from the direction in which the first bent portion is bent.

Each of the magnets may include a first lateral surface and a second lateral surface adjoining the rotor cores respectively disposed on both sides of each of the magnets, wherein a distance between the first lateral surface and the second lateral surface in a circumferential direction of the rotor is constant.

The lateral surface of each of the magnets may include a first inclined surface inclined with respect to the imaginary plane connecting the one end of the upper end portion of each of the magnets to the one end of the lower end portion of each of the magnets, and a second inclined surface connected with the first inclined surface.

Each of the magnets may include a width increasing portion having a width increasing within at least one section of each of the magnets as each of the magnets extends in a direction in which a radius of the rotor increases.

Each of the magnets may include a width decreasing portion having a width decreasing within at least one section of each of the magnets as each of the magnets extends in a direction in which a radius of the rotor increases.

A width of the lower end portion of each of the magnets may be equal to or greater than a width of the upper end portion of each of the magnets.

At least one portion of each of the magnets may include at least one line intersecting an imaginary plane connecting one end of an upper end portion of each of the magnets to one end of a lower end portion of each of the magnets.

In accordance with another aspect of the present disclosure, a motor includes a stator including a stator core having a core body and a plurality of core teeth extending inward from an inner circumferential surface of the core body in a radial direction of the core body, an insulator to cover both ends of the core body and the core teeth, and a coil wound around the core teeth, and a rotor to rotate through electromagnetic interaction with the stator, the rotor including a plurality of magnets arranged in a circumferential direction of the rotor, and a plurality of rotor cores alternated with the magnets in the circumferential direction of the rotor, magnetic flux formed at the magnets being concentrated at the rotor cores, wherein each of the magnets includes a width changing portion having a width changing within at least one section of each of the magnets in a direction extending from a lower end the rotor to an upper end of the rotor.

Each of the magnets may include a width increasing portion having a width increasing within at least one section of each of the magnets as each of the magnets extends in a direction from lower end the rotor toward the upper end of the rotor.

Each of the magnets may include a width decreasing portion having a width decreasing within at least one section of each of the magnets as each of the magnets extends in a direction from lower end of the rotor toward the upper end of the rotor.

A width of each of the magnets may increase and then decrease within at least one section of each of the magnets as each of the magnets extends in a direction from the lower end of the rotor toward the upper end of the rotor.

A width of each of the magnets may decrease and then increase within at least one section of each of the magnets as each of the magnets extends in a direction from the lower end of the rotor toward the upper end of the rotor.

A width of a lower end portion of each of the magnets may be equal to or greater than a width of an upper end portion of each of the magnets.

These and/or other aspects of the disclosure will become apparent and more readily appreciated from the following description of the embodiments, taken in conjunction with the accompanying drawings in which:
FIG. 1 is a view illustrating a washing machine according to an exemplary embodiment of the present disclosure;
FIG. 2 is a view illustrating a tub and a stator and rotor of a motor of the washing machine according to the exemplary embodiment of the present disclosure, in which the tub, stator and rotor are separated from each other;
FIG. 3 is a perspective view of the stator of FIG. 2;
FIG. 4 is an exploded perspective view illustrating constituents of the stator of FIG. 3, which are separated from each other;
FIG. 5 is an exploded perspective view of FIG. 4 taken at a different angle;
FIG. 6 is a perspective view of the stator shown in FIG. 2;
FIG. 7 is a plan view illustrating the rotor cores and the magnets of FIG. 6;
FIG. 8 is an enlarged view of section 'A' of FIG. 7;
FIG. 9 is a view illustrating coupling of a molding to the rotor cores and the magnets shown in FIG. 8;
FIG. 10 is a view illustrating rotor cores and magnets of a motor according to another embodiment of the present disclosure;

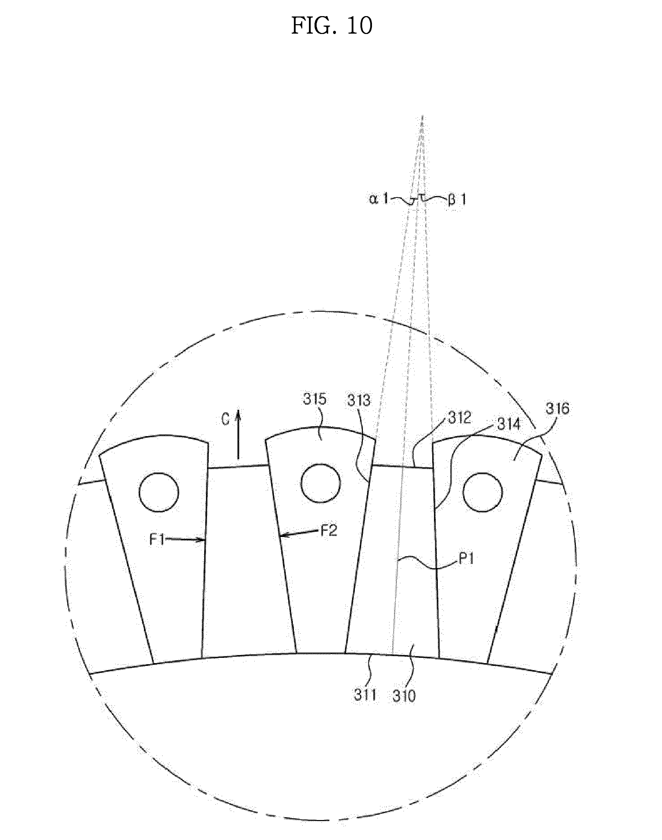

FIG. 10 is a view illustrating rotor cores and magnets of a motor according to another embodiment of the present disclosure;

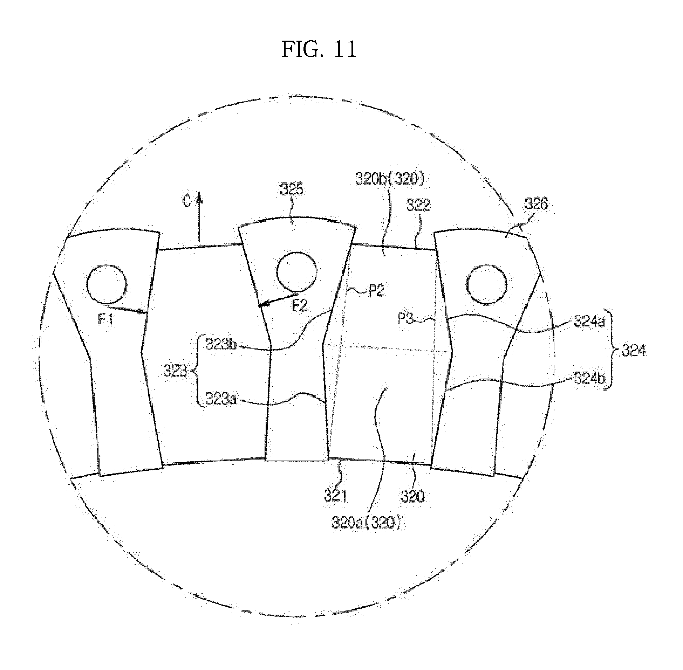

FIG. 11 is a view illustrating rotor cores and magnets of a motor according to another embodiment of the present disclosure;

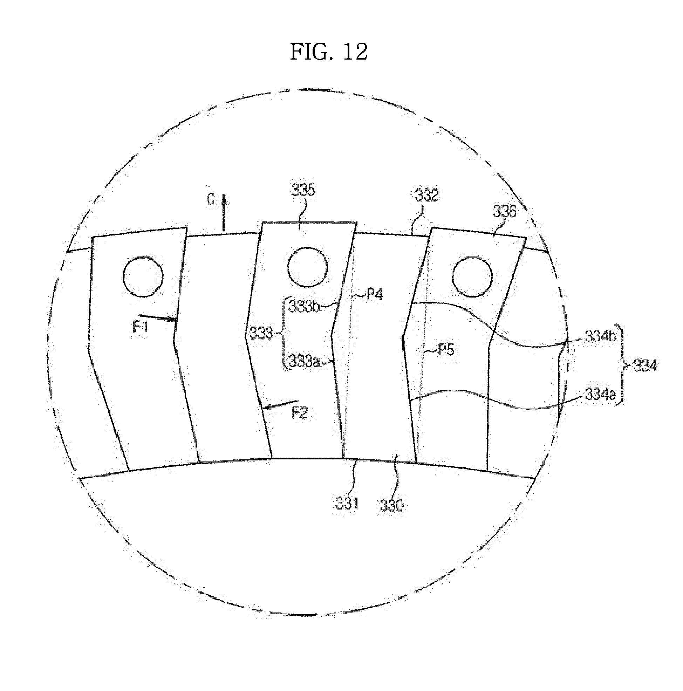

FIG. 12 is a view illustrating rotor cores and magnets of a motor according to another embodiment of the present disclosure;

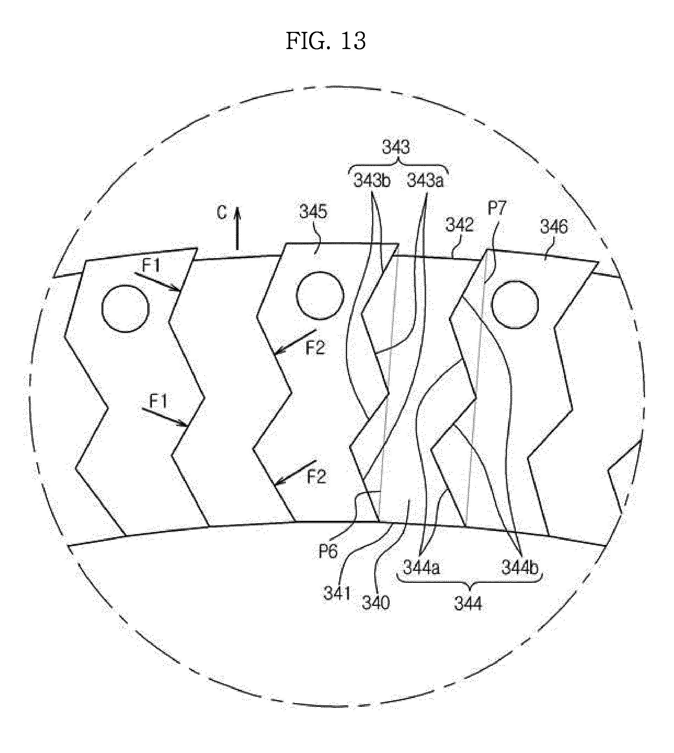

FIG. 13 is a view illustrating rotor cores and magnets of a motor according to another embodiment of the present disclosure;

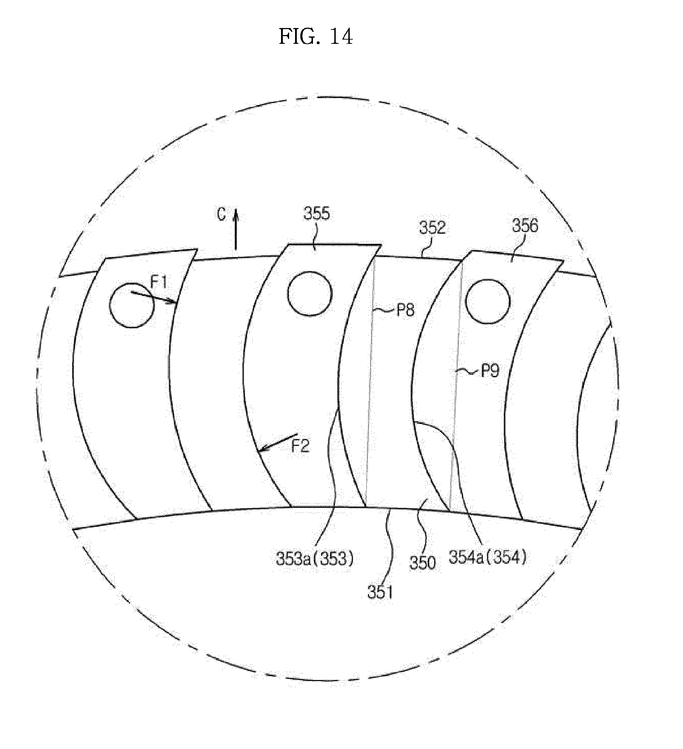

FIG. 14 is a view illustrating rotor cores and magnets of a motor according to another embodiment of the present disclosure; and

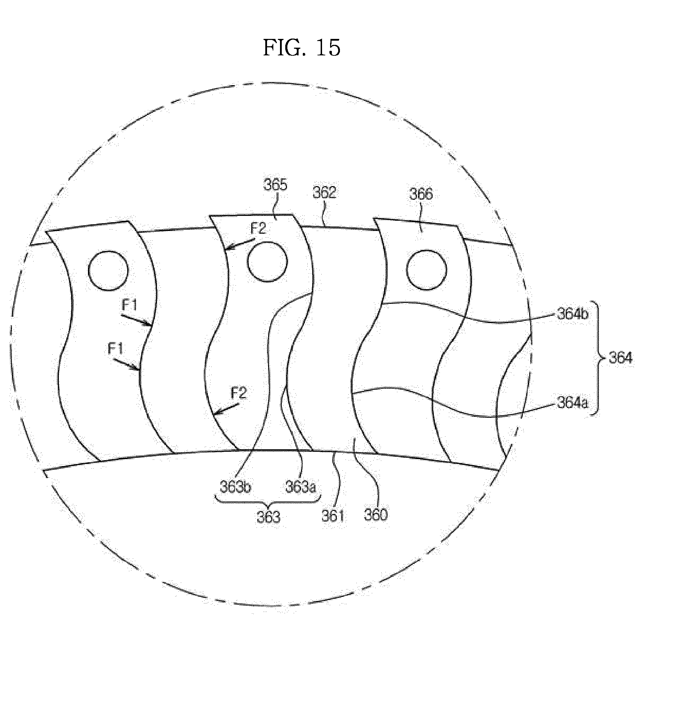

FIG. 15 is a view illustrating rotor cores and magnets of a motor according to another embodiment of the present disclosure;

Reference will now be made in detail to the embodiments of the present disclosure, examples of which are illustrated in the accompanying drawings, wherein like reference numerals refer to like elements throughout. Hereinafter, a description will be given of a motor, which is applicable to all kinds of apparatuses including an air conditioner, an electric vehicle, a light rail transit, an electric bicycle and a small generator that employs a motor as a power source. Hereinafter, a washing machine will be described as an example of application of the motor.

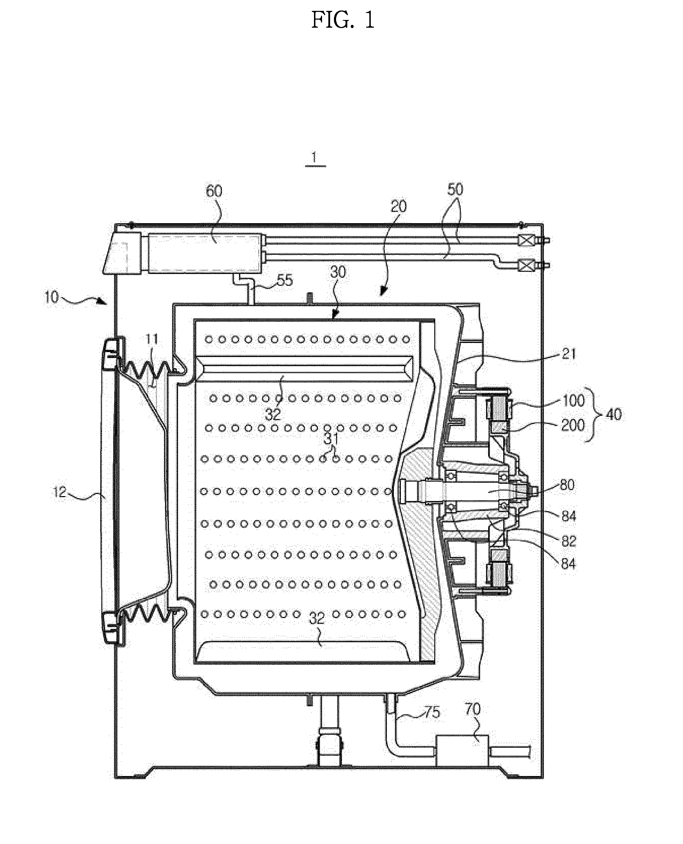

FIG. 1 is a view illustrating a washing machine according to an exemplary embodiment of the present disclosure.

As shown in FIG. 1, the washing machine 1 includes a cabinet 10 forming the outward appearance of the washing machine 1, a tub 20 disposed within the cabinet 10, a drum 30 rotatably disposed in the tub 20, and a motor 40 to rotate the drum 30.

The front portion of the cabinet 10 is provided with an inlet 11 through which laundry may be inserted into the drum 30. The inlet 11 is opened and closed by a door 12 installed at the front of the cabinet 10.

A water supply pipe 50 to supply wash water to the tub 20 is installed at an upper portion of the tub 20. One side of the water supply pipe 50 is connected to an external water supply source (not shown), and the other side of the water supply pipe 50 is connected to a detergent supply unit 60. The detergent supply unit 60 is connected to the tub 20 through a connection pipe 55. Water flowing into the water supply pipe 50 is supplied to the tub 20 along with a detergent via the detergent supply unit 60.

Installed at the lower portion of the tub 20 are a drain pump 70 and drain pipe 75 to discharge water in the tub 20 from the cabinet 10.

A plurality of through holes 31 is formed around the drum 30 to allow flow of wash water therethrough, and a plurality of lifters 32 is installed on the inner circumferential surface of the drum 30 to allow the laundry to tumble during rotation of the drum 30.

The drum 30 and motor 40 are connected to each other through a drive shaft 80. The drive shaft 80 transmits rotating power of the motor 40 to the drum 30. One end of the drive shaft 80 is connected to the drum 30, and the other end of the drive shaft 80 extends to the outside of the rear wall 21 of the tub 20.

Installed at the rear wall 21 of the tub 20 is a bearing housing 82 by which the drive shaft 80 is rotatably supported. The bearing housing 82 may be formed of an aluminum alloy, and may be inserted into the rear wall 21 of the tub 20 when the tub 20 is manufactured through injection molding. Bearings 84 are installed between the bearing housing 82 and the drive shaft 80 to allow smooth rotation of the drive shaft 80.

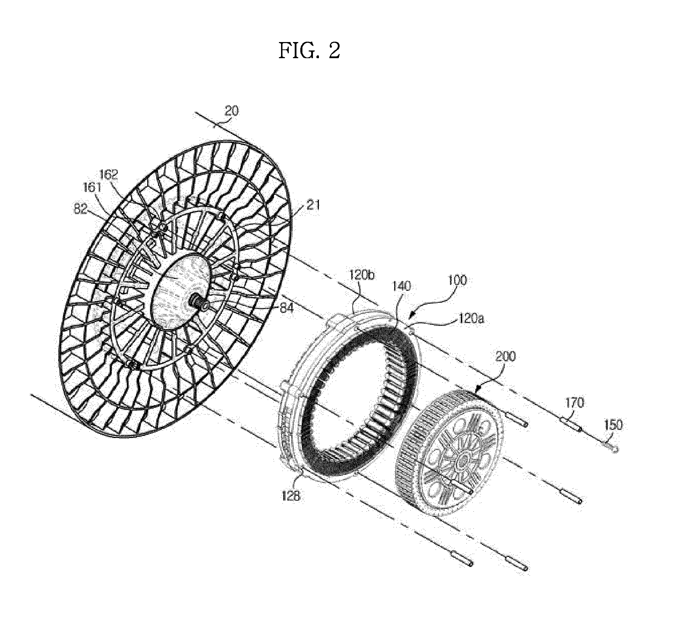

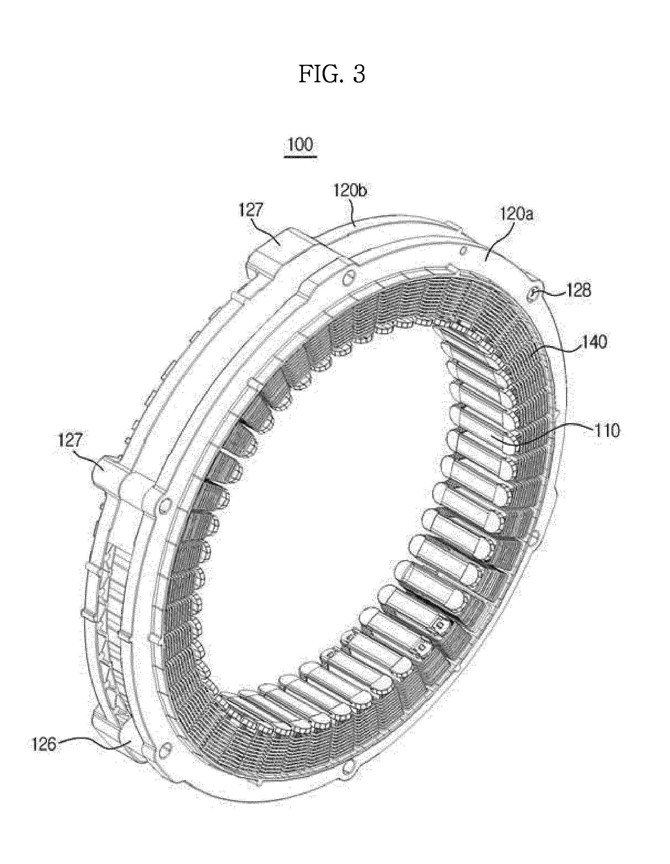

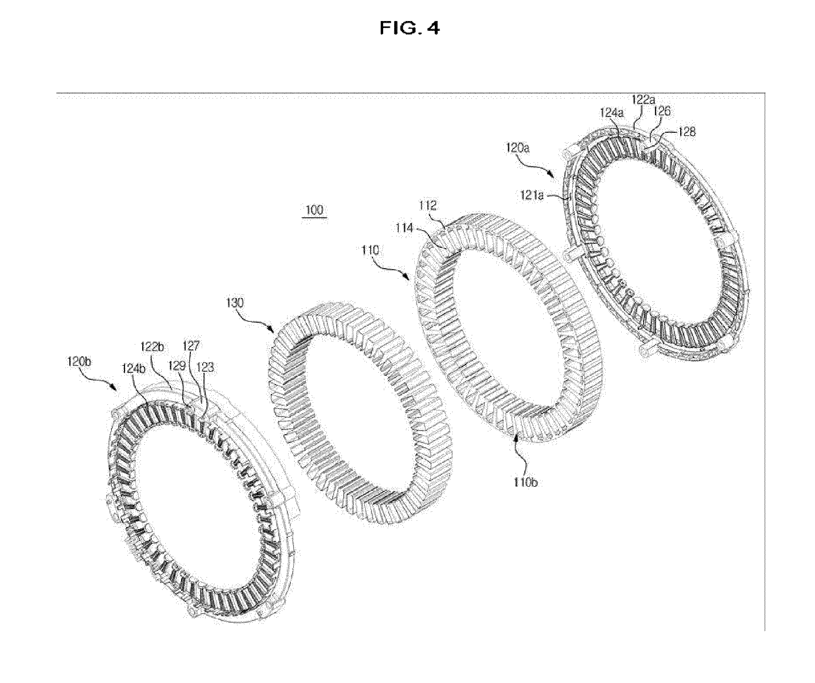

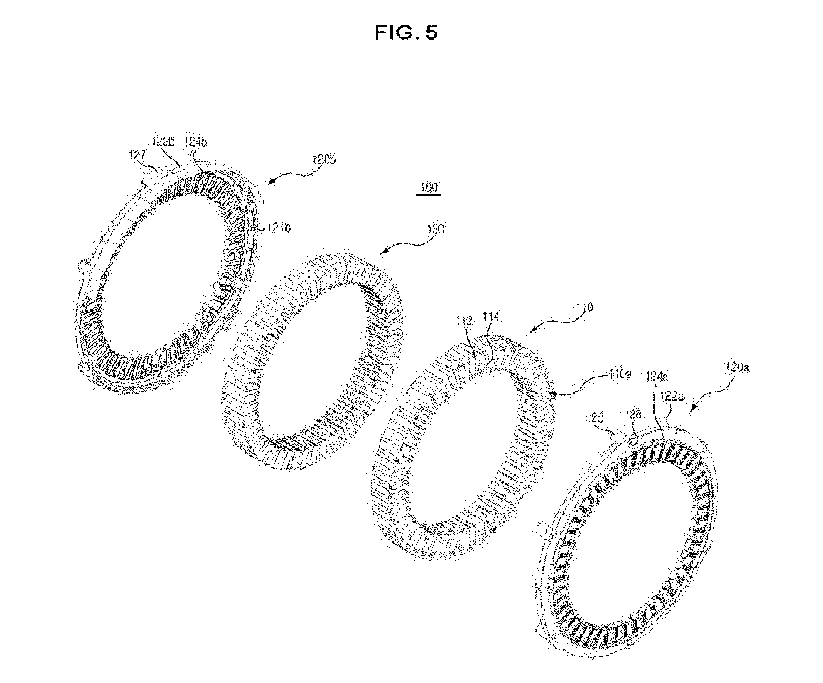

FIG. 2 is a view illustrating a tub and a stator and rotor of a motor of the washing machine according to the exemplary embodiment of the present disclosure, in which the tub, stator and rotor are separated from each other, and FIG. 3 is a perspective view of the stator of FIG. 2. FIG. 4 is an exploded perspective view illustrating constituents of the stator of FIG. 3, which are separated from each other, and FIG. 5 is an exploded perspective view of FIG. 4 taken at a different angle. The coil is shown in FIGS. 4 and 5.

As shown in FIGS. 1 to 5, the motor 40 is coupled to the outside of the tub 20 to rotate the drum 30 in opposite directions. The motor 40 includes a stator 100 mounted to the rear wall 20 of the tub 20, and a rotor 200 disposed around the stator 100 to rotate through electromagnetic interaction with the stator 100.

The stator 100 includes a stator core 110 formed of a metal material, a first insulator 120a and a second insulator 120b covering both ends 110a and 110b of the stator core 110, an insulation film 130 inserted between the first insulator 120a and the second insulator 120b, and a coil 140 wound around the first insulator 120a, second insulator 120b and insulation film 130. The stator core 110 may be formed by stacking metal plates processed through press working. The first insulator 120a, second insulator 120b and insulation film 130 may be formed of materials exhibiting strong electrical insulation.

The stator core 110 includes a ring-shaped core body 112, and a plurality of core teeth 114 extending inward from the inner circumferential surface of the core body 112 in the radial direction of the core body 112 and arranged spaced apart from each other along the inner circumferential surface of the core body 112.

The first insulator 120a includes a first insulator body 122a having a shape corresponding to that of the core body 112, and a plurality of first insulator teeth 124a having a shape corresponding that of the core teeth 114. Provided at the inner side of the first insulator body 122a is a first core accommodation portion 121a formed in a shape corresponding to the external shape of the stator core 110 to accommodate the stator core 110. The first insulator teeth 124a extend inward in the radial direction of the first insulator body 122a and are arranged spaced apart from each other along the inner circumferential surface of the first insulator body 122a.

The first insulator 120a further includes a plurality of connection ribs 126 connected to the second insulator 120b, and first through holes 128 stator 100 to fix the tub 20 to the rear wall 21 therethrough. The connection ribs 126 protrude from the first insulator body 122a toward the second insulator 120b, and are arranged spaced a predetermined distance apart from each other in the circumferential direction of the first insulator body 122a and adapted to be connected to the second insulator 120b when the stator core 110, first insulator 120a and second insulator 120b are coupled to each other. The first through holes 128 are formed through the first insulator body 122a and the connection rib 126. Sleeves 170 may be inserted into the first through holes 128 to reinforce fastening of the stator 100 to the tub 20.

The length of the connection rib 126 protruding from the first insulator 120a may vary depending on the stack height of the stator core 110. That is, if the stack of the stator core 110 is high, the connection rib 126 may be formed to have a long protruding length. If the stack of stator core 110 is short, the connection rib 126 may be formed to have a short protruding length. In case that the connection ribs 126 and the first insulator 120a are integrally formed through injection molding, a mold for injection molding of the first insulator 120a does not need to be separately fabricated whenever the length of the connection ribs 126 changes according to change in the stack height of the stator core 110, but one mold may be used in common. The length of the connection ribs 126 may be adjusted during fabrication of the first insulator 120a through injection molding by filling a portion of the mold for formation of the connection ribs 126, which is pre-formed to have a deep depth, to the height corresponding to the protruding length of the connection ribs 126, using a tool such as a jig.

The second insulator 120b includes a second insulator body 122b having a shape corresponding to that of the core body 112, and a plurality of second insulator teeth 124b having a shape corresponding to that of the core teeth 114. Provided at the inner side of the second insulator body 122b is a second core accommodation portion 121b formed in a shape corresponding to the external shape of the stator core 110 to accommodate the stator core 110. The second insulator teeth 124b extend inward in the radial direction of the second insulator body 122b and are arranged spaced apart from each other along the inner circumferential surface of the second insulator body 122b.

The second insulator 120b further includes a plurality of fixing ribs 127 connected to the tub 20, second through holes 129 formed through the second insulator body 122b and the fixing rib 127, and a plurality of fixing pins 123 protruding from surfaces of the fixing ribs 127 facing the rear wall 21 of the tub 20 toward the rear wall 21 of the tub 20.

The fixing ribs 127 protrude from the second insulator body 122b toward the rear wall 21 of the tub 20, and are arranged spaced a predetermined distance apart from each other in the circumferential direction of the second insulator body 122b. The fixing ribs 127 contact the rear wall 21 of the tub 20 when the stator 110 is coupled to the tub 20.

The fixing pins 123 are adapted to determine the position of the stator 100 before being inserted into the rear wall 21 of the tub 20 to fix the stator 100 to the rear wall 21 of the tub 20. The second through holes 129 are formed through the second insulator body 122b and the fixing ribs 127, and are disposed to be concentric with the first through holes 128. Sleeves 170 may be inserted into the second through holes 129 to reinforce fastening of the stator 100 to the tub 20.

First accommodation holes 161 to accommodate the fixing pins 123 inserted thereinto and second accommodation holes 162 to accommodate fixing members 150 inserted thereinto are provided at the rear wall 21 of the tub 20 to which the stator 100 is mounted.

The first accommodation holes 161 allow the position of the stator 100 to be determined before the fixing pins 142 are accommodated therein to fix the stator 100 to the rear wall 21 of the tub 20, while the second accommodation holes 162 accommodate the fixing members 150 penetrating the sleeves 170, thereby allowing the stator 100 to be fixed to the rear wall 21 of the tub 20.

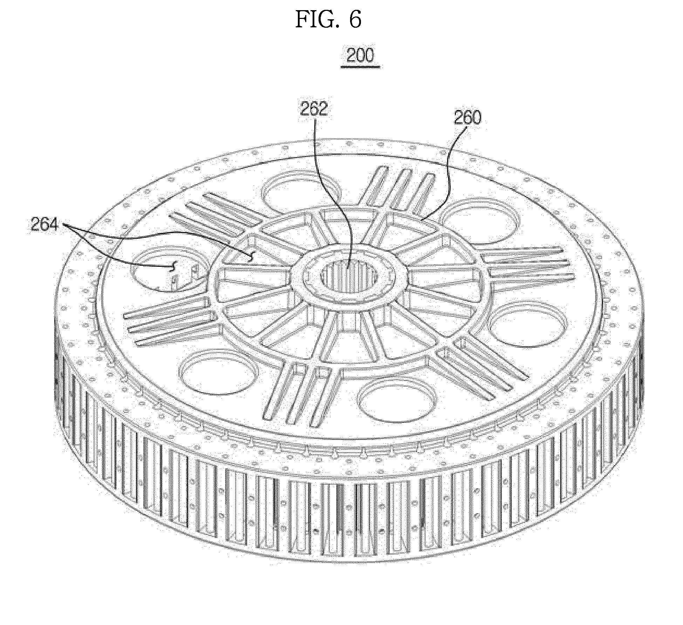

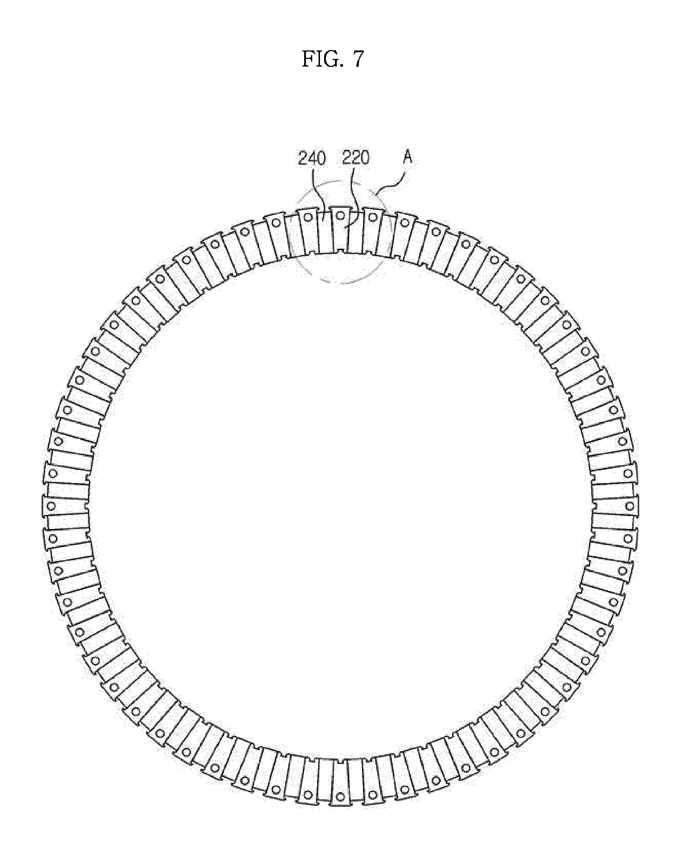

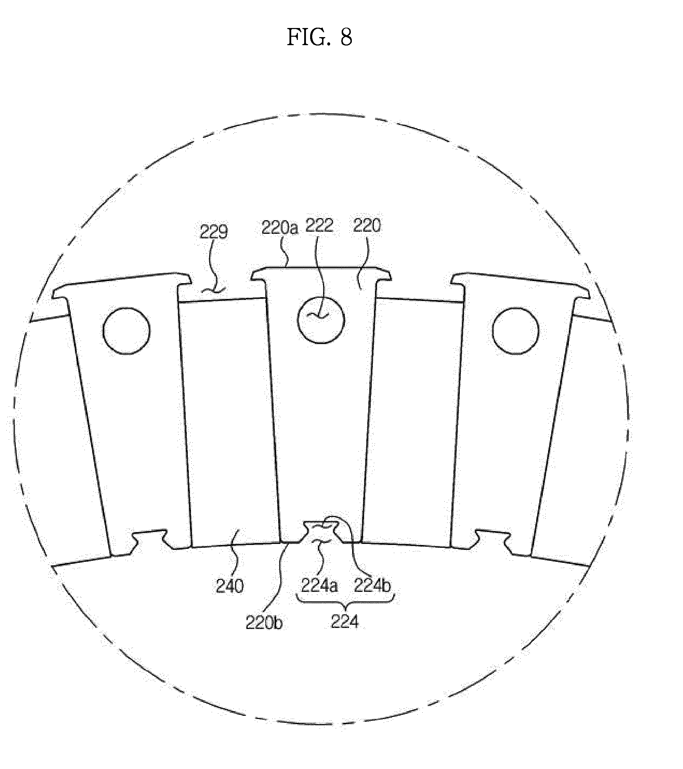

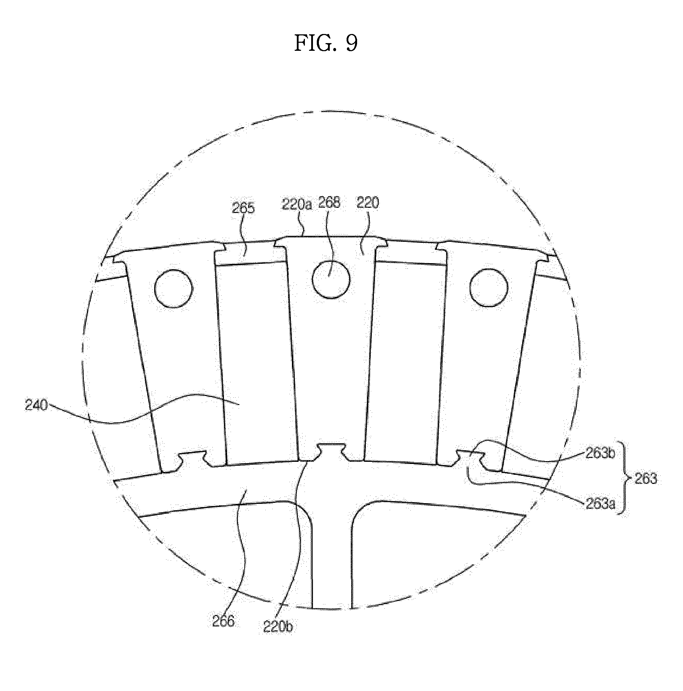

FIG. 6 is a perspective view of the stator shown in FIG. 2, FIG. 7 is a plan view illustrating the rotor core and the magnets of FIG. 6, FIG. 8 is an enlarged view of section 'A' of FIG. 7, and FIG. 9 is a view illustrating coupling of a molding to the rotor core and the magnets shown in FIG. 8.

As shown in FIGS. 6 to 9, the rotor 200 includes a plurality of rotor cores 220 disposed in a radial shape, a plurality of magnets 240 respectively disposed between the rotor cores 220, and a molding 260 to support the rotor cores 220 and the magnets 240.

The rotor cores 220 support the magnets 240, and form a magnetic path created at the magnets 240. The rotor cores 220 are arranged along the circumferential direction of the rotor 200, and respectively disposed spaced apart from each other between the rotor cores 220 to accommodate the magnets 240.

Each of the rotor cores 220 includes an inner end 220b disposed adjacent to the center of the rotor 200, and an outer end 220a disposed adjacent to the stator core 114 to define an air gap together with the stator core 114. The width of each of the rotor cores 220 in a circumferential direction increases as it extends from the inner end 220b thereof to the outer end 220a thereof. The rotor cores 220 may be formed by stacking silicon steel plates processed through press working.

In addition, each of the segmented rotor cores 220 includes a through hole 222 and a coupling groove 224. The through hole 222 and coupling groove 224 are coupled to the molding 260 that supports the rotor cores 220.

The through hole 222 is formed through the body of the rotor core 220 such that the molding 260 is accommodated therein and coupled thereto during fabrication of the molding 260 through injection molding. The diameter of the through hole 222 may be between about 1.5mm and about 5mm. If the diameter of the through hole 222 is too small, the rotor cores 220 may not be securely supported by the molding 260. If the diameter of the through hole 222 is too large, the magnetic flux concentrated at the rotor core 220 may interrupt creation of a magnetic path through the outer end 220a of the rotor core 220.

In addition, a plurality of through holes 222 may be disposed in the radial direction of the rotor 200. If the number of the through holes 222 is too large, they may interrupt creation of a magnetic path through the outer end 220a of the rotor core 220 as in the case of the through hole 222 having too large a diameter, which may cause the magnetic flux concentrated at the rotor core 220 to interrupt creation of the magnetic path through the outer end 220a of the rotor core 220. Therefore, the number may be equal to or less than three.

The coupling groove 224 includes a first accommodation portion 224a formed approximately at the center of the inner end 220b of the rotor core 220 and having a width in a circumferential direction which decreases as the first accommodation portion 224a extends from the inner end 220b toward the outer end 220a, and a second accommodation portion 224b connected with the first accommodation portion 224a, and having a width which increases as the second accommodation portion 224b extends from the inner end 220b toward the outer end 220a.

The first accommodation portion 224a and the second accommodation portion 224b accommodate the molding 260 when the molding 260 is fabricated through injection molding such the rotor core 220 and the molding 260 are securely coupled to each other.

The magnets 240, each of which is disposed between the corresponding ones of the rotor cores 220, are arranged along the circumferential direction of the rotor 200 to be radially positioned with respect to the center of the rotor 200. The magnet 240 may be a magnet containing a rare-earth element such as neodymium and samarium or a ferrite magnet which may semi-permanently maintain the magnetic property of high energy density.

The magnetic flux formed at the magnets 240 are arranged along the circumferential direction of the rotor 200. Any two neighboring ones of the magnets 240 are disposed such that the portions thereof having the same polarity face each other. If a magnetic circuit is formed in this way, the magnetic flux generated by the magnets 240 is concentrated, and therefore it may be possible to reduce the size of the motor 40 while improving the performance thereof.

The molding 260 includes a shaft hole 262 coupled to the drive shaft 80, and heat dissipation outlets 264 to dissipate heat generated during rotation of the rotor 200.

The molding 260 further includes a ring-shaped bridge 266 to support the rotor cores 220 and the magnets 240, and first to third coupling ribs 263, 265 and 268 to couple the molding 260 with the rotor cores 220 and the magnets 240.

The first coupling rib 263 includes a first inclined protrusion 263a protruding outward from the outer circumferential surface of the bridge 266 in the radial direction of the rotor 200 and inclined in a direction in which the width thereof decreases as the first coupling rib 263 extends outward, and a second inclined protrusion 263b formed from the first inclined protrusion 263a to be inclined in a direction in which the width thereof increases as the second inclined protrusion 263b extends from the first inclined protrusion 263a.

The first inclined protrusion 263a is accommodated in and coupled to the first accommodation portion 224a, and the second inclined protrusion 263b is accommodated in and coupled to the second accommodation portion 224b, such that the rotor core 200 is coupled to the bridge 266. Particularly, the second inclined protrusion 263b is formed in the shape of a step whose width widens in the circumferential direction of the rotor 200, thereby effectively preventing the rotor core 220 from being separated from the bridge 266 by centrifugal force generated during rotation of the rotor 200.

The second coupling rib 265 is accommodated in a space 229 formed by respective surfaces of neighboring rotor cores 220 facing each other and one end of a magnet 240 disposed between the neighboring rotor cores 220 to reinforce the rotor 200 and prevent exposure of the magnet 240 to the outside.

The third coupling rib 268 is accommodated in and coupled to the through hole 222 provided in the rotor core 220 to prevent, in cooperation with the second inclined protrusion 263b, the rotor core 220 from being separated from the bridge 266.

The first to third coupling ribs 263, 265 and 268 are respectively formed in shapes corresponding to those of the coupling groove 224, the space 229 formed by the rotor cores 220 and the magnet 240, and the through hole 224 during the process of integration of the molding 260 with the rotor cores 220 and the magnets 240 using the insert injection molding technique.

Hereinafter, rotor cores and magnets of a motor according to other embodiments of the present disclosure will be described in detail.

FIG. 10 is a view illustrating rotor cores and magnets of a motor according to another embodiment of the present disclosure.

As shown in FIG. 10, the magnet 310 is formed in a trapezoidal shape in a manner that the width thereof gradually decreases as the magnet 310 extends from the lower end portion 311 of the magnet 310 toward the upper end portion 312 of the magnet 310. The magnet 310 includes a first lateral surface 313 and a second lateral surface 314 which respectively adjoin the rotor cores 315 and 316 disposed on both sides of the magnet 310. The first lateral surface 313 and the second lateral surface 314 are inclined with respect to a plane P1 connecting the center of the lower end portion 311 of the magnet 310 with the center of the upper end portion 312 of the magnet 310. Here, a first inclination angle α1 between the first lateral surface 313 and the plane P1 may be equal to a second inclination angle β1 between the second lateral surface 314 and the plane P1.

The rotor cores 315 and 316 are disposed with the magnet 310 placed therebetween, and respectively adjoin the first lateral surface 313 and second lateral surface 314 of the magnet 310 to support the magnet 310.

When the rotor 200 rotates through electromagnetic interaction with the stator 100, centrifugal force C is exerted on the magnet 310. The direction in which the centrifugal force C is exerted is identical to the direction in which the radius of the rotor 200 increases. Since the first lateral surface 313 and the second lateral surface 314 of the magnet 310 adjoining the rotor cores 315 and 316 are arranged inclined with respect to a plane P1 connecting the center of the lower end portion 311 of the magnet 310 with the center of the upper end portion 312 of the magnet 310, forces F1 and F2 to support the magnet 310 are additionally generated and exerted on the first lateral surface 313 and the second lateral surface 314 of the magnet 310 in a direction perpendicular to the first lateral surface 313 and the second lateral surface 314 according to the principle of action and reaction. By the shapes of the magnet 310 and the rotor cores 315 and 316 as above, the magnet 310 is stably supported, and thus separation of the magnet 310 from the rotor cores 315 and 316 is prevented during rotation of the rotor 200.

In addition, if the first inclination angle α1 is equal to the second inclination angle β1 between the second lateral surface 314 and the plane P1, i.e., if the shape of magnet 310 is symmetrical with respect to the plane P1, the area of contact between the first lateral surface 313 and the second lateral surface 314 of the magnet 310 and the rotor cores 315 and 316 is greater than the area of the plane P1. This means that the density of magnetic flux concentrated at the rotor cores 315 and 316 by the first lateral surface 313 and the second lateral surface 314 of the magnet 310 arranged inclined with respect to the plane P1 is greater than the density of magnetic flux concentrated at the rotor cores 315 and 316 by the first lateral surface 313 and the second lateral surface 314 of the magnet 310 arranged parallel with the plane P1. Therefore, the output performance of the motor 40 is greater when the first lateral surface 313 and the second lateral surface 314 of the magnet 310 are arranged inclined.

FIG. 11 is a view illustrating rotor cores and magnets of a motor according to another embodiment of the present disclosure.

As shown in FIG. 11, the magnet 320 is formed in an approximately diamond shape in a manner that the width thereof gradually increases and then gradually decreases as the magnet 320 extends from the lower end portion 321 of the magnet 320 toward the upper end portion 322 of the magnet 320.

The magnet 320 includes a first lateral surface 323 and a second lateral surface 324 which respectively adjoin the rotor cores 325 and 326 disposed at both sides of the magnet 320.

The first lateral surface 323, which is formed to be bent approximately in the circumferential direction of the rotor 200, includes a first inclined surface 323a formed to be inclined with respect to plane P2 connecting one end of the upper end portion 322 of the magnet 320 to one end of the lower end portion 321 of the magnet 320, and a second inclined surface 323b connected to the first inclined surface 323a to be inclined with respect to the first inclined surface 323a.

The second lateral surface 324, which is formed to be bent in the opposite direction to the first lateral surface 323, includes a third inclined surface 324a formed to be inclined with respect to plane P3 connecting the other end of the upper end portion 322 of the magnet 320 to the other end of the lower end portion 321 of the magnet 320, and a fourth inclined surface 324b connected with the first inclined surface 323a to be inclined with respect to the third inclined surface 324a.

The first inclined surface 323a and the third inclined surface 324a form a width increasing portion 320a at which the width of the magnet 320 gradually increases in a direction extending from the lower end portion 321 of the magnet 320 to the upper end portion 322 of the magnet 320, while the second inclined surface 323b and the fourth inclined surface 323b form a width decreasing portion 320b at which the width of the magnet 320 gradually decreases in a direction extending from the lower end portion 321 of the magnet 320 to the upper end portion 322 of the magnet 320.

The rotor cores 325 and 326 are disposed with the magnet 320 placed therebetween, and respectively adjoin the first lateral surface 323 and second lateral surface 324 of the magnet 320 to support the magnet 320.

When the rotor 200 rotates through electromagnetic interaction with the stator 100, centrifugal force C is exerted on the magnet 320. The direction in which the centrifugal force C is exerted is identical to the radial direction of the rotor 200. Since the second inclined surface 323b of the magnet 320 adjoining the rotor cores 325 and 326 is arranged inclined with respect to a plane P2 connecting one end of the upper end portion 322 of the magnet 320 with one end of the lower end portion 321 of the magnet 320, and the fourth inclined surface 324b of the magnet 320 is arranged inclined with respect to a plane P3 connecting the other end of the upper end portion 322 of the magnet 320 with the other end of the lower end portion 321 of the magnet 320, forces F1 and F2 to support the magnet 320 are additionally generated and exerted on the second inclined surface 323b and the fourth inclined surface 324b of the magnet 320 in a direction perpendicular to the second inclined surface 323b and the fourth inclined surface 324b according to the principle of action and reaction. By the shapes of the magnet 320 and the rotor cores 325 and 326 as above, the magnet 320 is stably supported, and thus separation of the magnet 320 from the rotor cores 325 and 326 is prevented during rotation of the rotor 200.

In addition, if the planes P2 and P3 are in parallel with each other in the radial direction of the rotor 200, the area of contact between the first lateral surface 323 and the second lateral surface 324 of the magnet 320 and the rotor cores 325 and 326 is greater than the area of the planes P2 and P3. This means that the density of magnetic flux concentrated at the rotor cores 325 and 326 by the first lateral surface 323 and the second lateral surface 324 of the magnet 320 arranged inclined with respect to the planes P2 and P3 is greater than the density of magnetic flux concentrated at the rotor cores 325 and 326 by the first lateral surface 323 and the second lateral surface 324 of the magnet 320 arranged parallel with the planes P2 and P3. Therefore, the output performance of the motor 40 is greater when the first lateral surface 323 and the second lateral surface 324 of the magnet 320 are inclined.

Although not shown in FIG. 11, the magnet 320 may be formed in a manner that the width thereof gradually decreases and then gradually increases as the magnet 320 extends from the lower end portion 321 of the magnet 320 toward the upper end portion 322 of the magnet 320. This arrangement may also prevent separation of the magnet 320 from the rotor cores 325 and 326 and improve the output performance of the motor 40.

FIG. 12 is a view illustrating rotor cores and magnets of a motor according to another embodiment of the present disclosure, and FIG. 13 is a view illustrating rotor cores and magnets of a motor according to another embodiment of the present disclosure.

As shown in FIG. 12, the magnet 330 is formed to be bent approximately in the circumferential direction of the rotor 200.

The magnet 330 includes a first lateral surface 333 and a second lateral surface 334 which respectively adjoin the rotor cores 335 and 336 disposed at both sides of the magnet 330.

The first lateral surface 333 includes a first inclined surface 333a formed to be inclined with respect to plane P4 connecting one end of the upper end portion 332 of the magnet 330 to one end of the lower end portion 331 of the magnet 330, and a second inclined surface 333b connected with the first inclined surface 333a to be inclined with respect to the first inclined surface 333a.

The second lateral surface 334 includes a third inclined surface 334a formed to be inclined with respect to a plane P5 connecting the other end of the upper end portion 332 of the magnet 330 to the other end of the lower end portion 331 of the magnet 330, and a fourth inclined surface 334b connected to the third inclined surface 334a to be inclined with respect to the third inclined surface 334a. The third inclined surface 334a may be arranged approximately parallel to the first inclined surface 333a, and the fourth inclined surface 334b may be arranged approximately parallel to the second inclined surface 333b.

The distance between the first lateral surface 333 and the second lateral surface 334 may be kept constant from the lower end 331 of the magnet 330 to the upper end 332 of the magnet 330.

The rotor cores 335 and 336 are disposed with the magnet 330 placed therebetween, and respectively adjoin the first lateral surface 333 and the second lateral surface 334 of the magnet 330 to support the magnet 330.

When the rotor 200 rotates through electromagnetic interaction with the stator 100, centrifugal force C is exerted on the magnet 330. The direction in which the centrifugal force C is exerted is identical to the direction in which the radius of the rotor 200 increases. Since the second inclined surface 333b of the magnet 330 adjoining the rotor cores 335 and 336 is arranged inclined with respect to plane P4 connecting one end of the upper end portion 332 of the magnet 330 with one end of the lower end portion 331 of the magnet 330, and the third inclined surface 334a of the magnet 330 is arranged inclined with respect to plane P5 connecting the other end of the upper end portion 332 of the magnet 330 with the other end of the lower end portion 331 of the magnet 330, forces F1 and F2 to support the magnet 330 are additionally generated and exerted on the second inclined surface 333b and the third inclined surface 334a of the magnet 330 in a direction perpendicular to the second inclined surface 333b and the third inclined surface 334a according to the principle of action and reaction. By the shapes of the magnet 330 and the rotor cores 335 and 336 as above, the magnet 330 is stably supported, and thus separation of the magnet 330 from the rotor cores 335 and 336 is prevented during rotation of the rotor 200.

In addition, if the planes P4 and P5 are in parallel with each other in the radial direction of the rotor 200, the area of contact between the first lateral surface 333 and the second lateral surface 334 of the magnet 330 and the rotor cores 335 and 336 is greater than the area of the planes P4 and P5. This means that the density of magnetic flux concentrated at the rotor cores 335 and 336 by the first lateral surface 333 and the second lateral surface 334 of the magnet 330 arranged inclined with respect to the planes P4 and P5 is greater than the density of magnetic flux concentrated at the rotor cores 335 and 336 by the first lateral surface 333 and the second lateral surface 334 of the magnet 330 arranged parallel with the planes P4 and P5. Therefore, the output performance of the motor 40 is greater when the first lateral surface 333 and the second lateral surface 334 of the magnet 330 are inclined.

As shown in FIG. 13, the magnet 340 is formed to be alternately bent approximately in the circumferential direction of the rotor 200 and in the opposite direction thereto. The magnet 340 includes a first lateral surface 343 and a second lateral surface 344 which respectively adjoin the rotor cores 345 and 346 disposed at both sides of the magnet 340.

The first lateral surface 343 includes at least two first inclined surfaces 343a formed to be inclined with respect to a plane P6 connecting one end of the upper end portion 342 of the magnet 340 to one end of the lower end portion 341 of the magnet 340, and at least two second inclined surfaces 343b connected with the first inclined surfaces 343a to be inclined with respect to the first inclined surfaces 343a. The first inclined surfaces 343a and second inclined surfaces 343b are alternately disposed.

The second lateral surface 344 includes at least two third inclined surface 344a formed to be inclined with respect to a plane P7 connecting the other end of the upper end portion 342 of the magnet 340 to the other end of the lower end portion 341 of the magnet 340, and at least two fourth inclined surfaces 344b connected to the third inclined surfaces 344a to be inclined with respect to the third inclined surfaces 344a. The third inclined surfaces 344a and the fourth inclined surfaces 344b are alternately disposed. The third inclined surfaces 344a may be arranged approximately parallel to the first inclined surfaces 343a, and the fourth inclined surfaces 344b may be arranged approximately parallel to the second inclined surfaces 343b.

The distance between the first lateral surface 343 and the second lateral surface 344 may be kept constant from the lower end 341 of the magnet 340 to the upper end 342 of the magnet 340.

The rotor cores 345 and 346 are disposed with the magnet 340 placed therebetween, and respectively adjoin the first lateral surface 343 and the second lateral surface 344 of the magnet 340 to support the magnet 340.

Since the magnet 340 according to the illustrated embodiment of the present disclosure includes more inclined surfaces 343a, 343b, 344a and 344b than the magnet 330 of the previous embodiment, forces F1 and F2 to support the magnet 340 are additionally generated at more points, and accordingly, coupling between the magnet 340 and the rotor cores 345 and 346 may be further secured. In addition, since the area of contact between the first lateral surface 343 and second lateral surface 344 of the magnet 340 and the rotor cores 345 and 346 increases, the density of magnetic flux concentrated at the rotor cores 345 and 346 also increases. Accordingly, the performance of the motor 40 may be further improved.

FIG. 14 is a view illustrating rotor cores and magnets of a motor according to another embodiment of the present disclosure, and FIG. 15 is a view illustrating rotor cores and magnets of a motor according to another embodiment of the present disclosure.

As shown in FIG. 14, the magnet 350 is curved approximately in the circumferential direction of the rotor 200.

The magnet 350 includes a first lateral surface 353 and a second lateral surface 354 which respectively adjoin the rotor cores 355 and 356 disposed on both sides of the magnet 350. The first lateral surface 353 includes a first curved portion 353a curved approximately in the circumferential direction of the rotor 200, and the second lateral surface 354 includes a second curved portion 354a curved approximately in parallel with the first curved portion 353a. The curved sections of the first curved portion 353a and the second curved portion 354a may be curved surfaces.

The distance between the first lateral surface 353 and the second lateral surface 354 may be kept constant from the lower end 351 of the magnet 350 to the upper end 352 of the magnet 350.

The rotor cores 355 and 356 are disposed with the magnet 350 placed therebetween, and respectively adjoin the first lateral surface 353 and the second lateral surface 354 of the magnet 350 to support the magnet 350.

When the rotor 200 rotates through electromagnetic interaction with the stator 100, centrifugal force C is exerted on the magnet 350. The direction in which the centrifugal force C is exerted is identical to the direction in which the radius of the rotor 200 extends. Forces F1 and F2 to support the magnet 350 are additionally generated and exerted on the first curved portion 353a and the second curved portion 354a of the magnet 350 adjoining the rotor cores 355 and 356 according to the principle of action and reaction. By the shapes of the magnet 350 and the rotor cores 355 and 356 as above, the magnet 350 is stably supported, and thus separation of the magnet 350 from the rotor cores 355 and 356 is prevented during rotation of the rotor 200.

In addition, the contact area between the first lateral surface 353 and the second lateral surface 354 of the magnet 350 and the rotor cores 355 and 356 is greater than the area of the plane P8 connecting one end of the upper end portion 352 of the magnet 350 to one end of the lower end portion 351 of the magnet 350 and the plane P9 connecting the other end of the upper end portion 352 of the magnet 350 to the other end of the lower end portion 351 of the magnet 350. Therefore, the density of magnetic flux concentrated at the rotor cores 355 and 356 increases and thereby the output performance of the motor 40 may be enhanced.

As shown in FIG. 15, the magnet 360 is alternately curved approximately in the circumferential direction of the rotor 200 and in the opposite direction thereto.

The magnet 360 includes a first lateral surface 363 and a second lateral surface 364 which respectively adjoin the rotor cores 365 and 366 disposed at both sides of the magnet 360.

The first lateral surface 363 includes at least one first curved portion 363a curved in the circumferential direction of the rotor 200, and at least one second curved portion 363b connected with the first curved portion 363a curved in the opposite direction to the first curved portion 363a.

The second lateral surface 364 includes at least one third curved portion 364a curved in parallel with the first curved portion 363a, and at least one fourth curved portion 364b connected with the third curved portion 364a and curved in parallel with the second curved portion 363b. The curved sections of the first curved portion 363a and the second curved portion 364a and the curved sections of the third curved portion 364a and the fourth curved portion 364b may be curved surfaces.

The distance between the first lateral surface 363 and the second lateral surface 364 may be kept constant from the lower end 361 of the magnet 360 to the upper end 362 of the magnet 360.

The rotor cores 365 and 366 are disposed with the magnet 360 placed therebetween, and respectively adjoin the first lateral surface 363 and the second lateral surface 364 of the magnet 360 to support the magnet 360.

Since the magnet 360 according to the illustrated embodiment of the present disclosure include more curved portions 363a, 363b, 364a and 364b than the magnet 350 of the previous embodiment, forces F1 and F2 to support the magnet 360 are additionally generated at more points, and accordingly, coupling between the magnet 360 and the rotor cores 365 and 366 may be further secured. In addition, since the contact area between the first lateral surface 363 and second lateral surface 364 of the magnet 360 and the rotor cores 365 and 366 increases, the density of magnetic flux concentrated at the rotor cores 365 and 366 also increase. Accordingly, the power performance of the motor 40 may be further improved.

As is apparent from the above description, a motor according to an embodiment of the present disclosure allows rotor cores and magnets to be securely coupled to each other, and thereby separation of the magnet from rotor cores may be prevented during rotation of the rotor.

In addition, since the density of magnetic flux concentrated at the rotor core increases according to increase in the contact area between the rotor core and the magnet, the performance of the motor may be improved.

Although a few embodiments of the present disclosure have been shown and described, it would be appreciated by those skilled in the art that changes may be made in these embodiments without departing from the principles of the invention, the scope of which is defined in the claims.

## Claims

1. A motor comprising a stator and a rotor rotatably disposed at an inside or outside of the stator,
wherein the rotor comprises:
a plurality of rotor cores radially disposed; and
a plurality of magnets respectively disposed between the rotor cores,
wherein an area of a lateral surface of each of the magnets adjoining a lateral surface of a corresponding one of the rotor cores is greater than an area of an imaginary plane connecting one end of an upper end portion of each of the magnets to one end of a lower end portion of each of the magnets.

2. The motor according to claim 1, wherein the lateral surface of each of the magnets comprises at least one first bent portion formed to be bent in a circumferential direction of the rotor.

3. The motor according to claim 2, wherein the lateral surface of each of the magnets comprises at least one second bent portion connected with the first bent portion and formed to be bent in a direction different from the direction in which the first bent portion is bent.

4. The motor according to claim 1, 2 or 3, wherein each of the magnets comprises a first lateral surface and a second lateral surface adjoining the rotor cores respectively disposed on both sides of each of the magnets,
wherein a distance between the first lateral surface and the second lateral surface in a circumferential direction of the rotor is constant.

5. The motor according to any one of the preceding claims, wherein the lateral surface of each of the magnets comprises:
a first inclined surface inclined with respect to the imaginary plane connecting the one end of the upper end portion of each of the magnets to the one end of the lower end portion of each of the magnets; and
a second inclined surface connected with the first inclined surface.

6. The motor according to any one of the preceding claims, wherein each of the magnets comprises a width increasing portion having a width increasing within at least one section of each of the magnets as each of the magnets extends in a direction in which a radius of the rotor increases.

7. The motor according to any one of claims 1 to 5, wherein each of the magnets comprises a width decreasing portion having a width decreasing within at least one section of each of the magnets as each of the magnets extends in a direction in which a radius of the rotor increases.

8. The motor according to any one of the preceding claims, wherein a width of the lower end portion of each of the magnets is equal to or greater than a width of the upper end portion of each of the magnets.

9. A motor comprising:
a stator comprising a stator core having a core body and a plurality of core teeth extending inward from an inner circumferential surface of the core body in a radial direction of the core body, an insulator to cover both ends of the core body and the core teeth, and a coil wound around the core teeth; and
a rotor to rotate through electromagnetic interaction with the stator, the rotor comprising a plurality of magnets arranged in a circumferential direction of the rotor, and a plurality of rotor cores alternated with the magnets in the circumferential direction of the rotor, magnetic flux formed at the magnets being concentrated at the rotor cores,
wherein each of the magnets comprises a width changing portion having a width changing within at least one section of each of the magnets in a direction extending from a lower end the rotor to an upper end of the rotor.

10. The motor according to claim 9, wherein each of the magnets comprises a width increasing portion having a width increasing within at least one section of each of the magnets as each of the magnets extends in a direction from lower end the rotor toward the upper end of the rotor.

11. The motor according to claim 9, wherein each of the magnets comprises a width decreasing portion having a width decreasing within at least one section of each of the magnets as each of the magnets extends in a direction from lower end of the rotor toward the upper end of the rotor.

12. The motor according to claim 9, wherein a width of each of the magnets increases and then decreases within at least one section of each of the magnets as each of the magnets extends in a direction from the lower end of the rotor toward the upper end of the rotor.

13. The motor according to claim 9, wherein a width of each of the magnets decreases and then increases within at least one section of each of the magnets as each of the magnets extends in a direction from the lower end of the rotor toward the upper end of the rotor.

14. The motor according to claim 9, wherein a width of a lower end portion of each of the magnets is equal to or greater than a width of an upper end portion of each of the magnets.
